# NEUE EUROPÄISCHE PATENTSCHRIFT

(11) **EP 1 493 065 B2**
(45) Veröffentlichungstag und Bekanntmachung des Hinweises auf die Entscheidung über den Einspruch: **16.06.2010**
(45) Hinweis auf die Patenterteilung: 12.07.2006
(21) Anmeldenummer: 03722456.5
(22) Anmeldetag: 11.04.2003
(51) Int. Cl.: G05B 17/02

(54) **VORRICHTUNG UND VERFAHREN ZUR SIMULATION VON PRODUKTIONSPROZESSEN**
DEVICE AND METHOD FOR SIMULATING PRODUCTION PROCESSES
DISPOSITIF ET PROCEDE POUR SIMULER DES PROCESSUS DE PRODUCTION

(30) Priorität: 11.04.2002 DE 10217022
(43) Veröffentlichungstag der Anmeldung: 05.01.2005
(73) Patentinhaber: CAD-FEM GmbH, 85567 Grafing (DE)
(72) Erfinder: STEINBECK-BEHRENS, Cord, 31303 Burgdorf (DE); NELZ, Jörn, 30169 Hannover (DE)
(74) Vertreter: Jehle, Volker Armin
(86) Internationale Anmeldenummer: PCT/EP2003/003796
(87) Internationale Veröffentlichungsnummer: WO 2003/085464

(56) Entgegenhaltungen:
- EP-A- 1 252 935
- DE-A- 10 038 816
- DE-A1- 19 752 137
- US-A- 5 521 477
- US-A- 5 797 288
- B. KREUZER, D. MILOJEVIC: 'Simulation tools improve planning and reliability of paint-finishing lines' INDUSTRIAL ROBOT Bd. 2, 1998 - 1998, MCB UNIVERSITY PRESS, ISSN 0143-991X Seiten 117 - 123

## Beschreibung

Die Erfindung betrifft eine Vorrichtung und ein Verfahren zur Simulation von Produktions-und/oder Produktionsvorbereitungs- und/oder Produktions-Nachbehandlungsprozessen, insbesondere von Oberflächenbehandlungsverfahren.

Bei der Produktion von z.B. Fahrzeugen, insbesondere Kraftfahrzeugen werden die Karosserie-Obeflächen mit Hilfe von Verfahren behandelt, welche im Allgemeinen eine Vielzahl verschiedener Schritte umfassen. Zusätzlich können - vor bzw. nach den eigentlichen Oberflächenbehandlungsschritten - auch ein oder mehrere Oberflächen-Vor- und/oder Oberflächen-Nachbehandlungsschritte durchgeführt werden.

Zunächst wird die Karosserie beispielsweise - gegebenenfalls in mehreren Stufen - gründlich gereinigt. Z.B. wird die Karosserie zunächst vorgereinigt, dann entfettet, gespült, phosphatiert, usw. Dabei können z.B. entsprechende Spritz- und/oder Tauchentfettungsverfahrensschritte durchgeführt werden bzw. kann die Karosserie in ein oder mehrere Reinigungs-Flüssigkeitsbäder eingetaucht werden.

Dann wird die Karosserie z.B. in ein (weiteres) Bad, beispielsweise ein Farbbad eingetaucht, wo z.B. mittels eines kathodischen Abscheideverfahrens, z.B. eines kathodischen Tauchlackierungsverfahrens, eine (erste) Beschichtung bzw. ein (erster) Überzug auf die Karosserie aufgebracht wird, z.B. eine Grundlackschicht.

Als Vorbereitung des Beschichtungs- bzw. Lackierungsprozesses können vorher noch z.B. ein oder mehrere Beizprozessschritte durchgeführt werden; z.B. kann die Karosserie in ein Beiz-, insbesondere ein Galvanik-Beiz-Bäder eingetaucht werden.

Nach Aufbringen der (ersten) Beschichtung bzw. der Grundlackschicht kann die aufgebrachte Beschichtung bzw. Lackschicht in einem Ofen ausgehärtet bzw. getrocknet, und dann die Karosserie wieder abgekühlt werden.

Als nächstes wird - z.B. durch Eintauchen in ein weiteres Bad, oder auf beliebige andere Weise, z.B. mittels entsprechender Sprühtechniken, beispielsweise einem elektrostatischen Lackierverfahren - eine weitere Beschichtung, z.B. eine (weitere) Lackschicht, beispielsweise eine Farb- bzw. Decklackschicht auf die Karosserie aufgebracht

Die aufgebrachte Beschichtung bzw. der Überzug wird dann z.B. in einem weiteren Ofen ausgehärtet bzw. getrocknet, und dann die Karosserie wieder abgekühlt, usw.

Bei den o.g. zur Behandlung bzw. Vor-/ Nachbehandlung von Karosserie-Oberflächen vorgesehen Schritten, insbesondere beim Ein- bzw. Austauchen der Karosserie in die o.g. Flüssigkeitsbäder, können eine Vielzahl von Problemen auftreten:

Die Karosserie-Bleche weisen i.A. mehrere offene Hohlräume auf. Beim Eintauchen der Karosserie in das entsprechende Flüssigkeitsbad kann es in diesen Hohlräumen zum Einschluß von Luftblasen kommen; diese verhindern, dass der entsprechende Hohlraum vollständig mit Flüssigkeit benetzt wird.

Des weiteren können die eingeschlossenen Luftblasen bei einer in ein Flüssigkeitsbad eingetauchten Karosserie zu relativ großen Auftriebskräften führen; das Karosserie-Blech wird hierdurch mechanisch einer hohen Beanspruchung ausgesetzt. Diese kann so groß sein, dass die Schalenstruktur der Karosserie beschädigt, z.B. verbeult wird.

Außerdem können nach dem Austauchen der Karosserie aus dem entsprechenden Flüssigkeitsbad in Karosserie-Senken Flüssigkeitsreste verbleiben, die nachfolgende Prozessschritte beeinträchtigen können.

Dieses einfache Beispiele verdeutlichen, wie wichtig es sein kann, beim beim jeweiligen Flüssigkeitsbad durchgeführten Prozeß die entsprechenden Prozeßparameter (Eintauchgeschwindigkeit, Austauchgeschwindigkeit, Vorschubgeschwindigkeit, Drehgeschwindigkeit beim Drehen der Karosserie z.B. vor, während und nach dem Eintauchen, etc.) optimal einzustellen.

Im Stand der Technik ist bekannt, die optimalen Prozessparameter durch eine "Trial and Error"-Methode, d.h. empirisch zu ermitteln. Hierbei werden - unter Verwendung von Karosserie-Prototypen - zahlreiche Versuche durchgeführt. Nach jedem Versuch werden die Prozessparameter geändert, bis ein hinsichtlich Qualität und Produktionszeit bzw. Produktionskosten befriedigendes Ergebnis erreicht wird.

Eine derartige "Trial and Error"-Methode ist zeitaufwändig und teuer.

Des weiteren kann bei derartigen, auf einer "Trial and Error"-Methode beruhenden Versuchsreihen ermittelt werden, dass bei einer bestimmten Karosserie-Form der Einschluß von Luftblasen in Karosserie-Hohlräumen beim Eintauchen, und/oder der Verbleib von Flüssigkeitsresten in Karosserie-Senken nicht (bzw. nur mit relativ großem Aufwand) verhindert werden kann.

Die Form der Karosserie muß dann nachträglich geändert werden (z.B. durch Vorsehen zusätzlicher Entlüftungsöffnungen zum Austritt von Luft beim Eintauchen, und/oder von zusätzlichen Drainageöffnungen zum Austritt von Flüssigkeit beim Austauchen).

Nach Vornahme der entsprechenden Änderungen an der Karosserie muß eine komplett neue Test-Schleife durchlaufen werden.

Die US 5 527 477 zeigt einen Roboter mit Spritzpistole, bei dem zur Kontrolle der Beschichtung ein Simulationsverfahren angewendet wird.

Der Erfindung liegt die Aufgabe zugrunde, eine neuartige Vorrichtung und ein neuartiges Verfahren zur Simulation von Produktions- und/oder Produktionsvorbereitungs- und/oder Produktions-Nachbehandlungsprozessen, insbesondere von Oberflächenbehandlungsverfahren bereitzustellen.

Sie erreicht dieses und weitere Ziele durch die Gegenstände der Ansprüche 1 und 14.

Vorteilhafte Weiterbildungen der Erfindung sind in den Unteransprüchen angegeben.

Im folgenden wird die Erfindung unter Bezug auf ein Ausführungsbeispiel und die beigefügte Zeichnung näher erläutert. In der Zeichnung zeigt:
Figur 1 eine schematische Darstellung eines Abschnitts einer Fertigungsstraße, bei welcher in mehreren, aufeinanderfolgenden Stufen eine Oberflächenbehandlung von Fahrzeugkarosserien vorgenommen wird;
Figur 2 eine schematische Darstellung von in einer Reinigungs- bzw. Lackierstufe gemäß Figur 1 durchgeführten Verfahrensschritten;
Figur 3 eine schematische Darstellung von zur Simulation verwendeten Karosserieflächen-Elementen eines Fahrzeugkarosserie-Rechennetzes; und
Figur 4 eine schematische Darstellung des Aufbaus und der Funktion des zur Simulation der Oberflächenbehandlungs-Prozesse verwendeten Softwareprogramms.

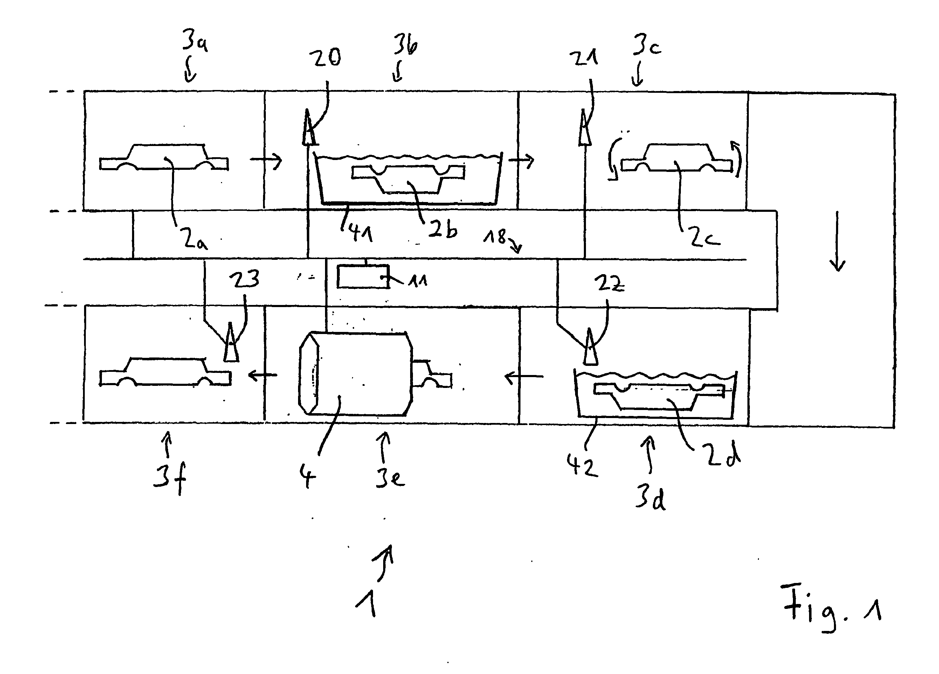

In Figur 1 ist eine schematische Darstellung eines Abschnitts einer Fertigungsstraße 1 gezeigt, bei welcher in mehreren, aufeinanderfolgenden Stufen 3a, 3b, 3c, 3c, 3d, 3e, 3f eine Oberflächenbehandlung von Fahrzeugkarosserien 2a, 2b, 2c, 2d vorgenommen wird.

Die Fahrzeugkarosserien 2a, 2b, 2c, 2d weisen alle im wesentlichen die gleiche Form auf, und werden ― wie hier durch entsprechende Pfeile veranschaulicht ― z.B. mit Hilfe eines Fließbands vollautomatisch zunächst zur ersten Bearbeitungs-Stufe 3a, von dort aus weiter zur zweiten Bearbeitungs-Stufe 3b, zur dritten Bearbeitungs-Stufe 3c, und dann zu den weiteren Bearbeitungs-Stufen 3d, 3e, 3f befördert, usw. Bei einem alternativen Ausführungsbeispiel können die Fahrzeugskarosserien auch unterschiedliche Formen aufweisen (z.B. können nacheinander eine Karosserie eines Cabrios, eines Caravans, etc. durch die verschiedenen Bearbeitungsstufen befördert werden).

In den Bearbeitungs-Stufen 3a, 3b - und gegebenenfalls in weiteren, hier nicht gezeigten Bearbeitungsstufen - werden die Fahrzeugkatosserien 2a, 2b, 2c, 2d gründlich gereinigt. Z.B. wird die jeweilige Fahrzeugkarosserie 2a, 2b, 2c, 2d, insbesondere das Karosserieinnere zunächst in der Bearbeitungs-Stufe 3a vorgereinigt, und dann in der Bearbeitungs-Stufen 3b - und gegebenenfalls in weiteren, hier nicht gezeigten Bearbeitungsstufen - spritzentfettet, tauchentfettet, gespült, phosphatiert, passiviert, usw.

Zur Durchführung eines entsprechenden Reinigungsschritts können einige der o.g. Bearbeitungs-Stufen 3a, 3b z.B. entsprechende Wannen bzw. Becken 41 aufweisen, die mit einer Reinigungsflüssigkeit gefüllt sind, in die die Fahrzeugkarosserien 2a, 2b, 2c, 2d z.B. mit Hilfe entsprechender Roboter 20 nacheinander zur Reinigung ein- und dann wieder ausgetaucht werden.

Nachdem die Fahrzeugkarosserien 2a, 2b, 2c, 2d gereinigt wurden, werden sie von den entsprechenden Reinigungs-Bearbeitungs-Stufen 3a, 3b aus einer weiteren Bearbeitungs-Stufe 3c zugeführt, wo die Fahrzeugkarosserien 2a, 2b, 2c, 2d - z.B. mittels eines Roboters 21 - hin-und hergekippt bzw. hin- und hergedreht werden, z.B. um möglichst weitgehend die ggf. noch auf der Karosserieoberfläche bzw. in Karosseriehohlräumen vorhandene Reinigungsflüssigkeit zu entfernen.

Daraufhin wird die jeweilige Fahrzeugkarosserie 2a, 2b, 2c, 2d einer weiteren Bearbeitungs-Stufe 3d zugeführt, in der die (in den Bearbeitungs-Stufen 3a, 3b, etc. gereinigte) Oberfläche der jeweiligen Fahrzeugkarosserie 2a, 2b, 2c, 2d einer entsprechenden Verarbeitung unterzogen wird.

Hierzu wird die entsprechende Fahrzeugkarosserie 2a, 2b, 2c, 2d mittels eines Roboters 22 z.B. in ein (Lack-)Bad bzw. ein (Lack-)Becken 42 ein-, und dann wieder ausgetaucht, insbesondere in ein Bad, in welchem mittels eines kathodischen Abscheideverfahrens (z.B. eines Electro Deposition Coating-Verfahrens) eine (erste) Beschichtung bzw. ein (erster) Überzug auf die Karosserie aufgebracht wird, z.B. eine Grundlackschicht oder eine beliebige andere Beschichtung.

Bei dem hier verwendeten kathodischen Abscheideverfahren kann es sich z.B. ein kathodisches Tauchlackierungsverfahren handeln.

Vor der Zufuhr der Fahrzeugkarosserien 2a, 2b, 2c, 2d zur Bearbeitungs-Stufe 3d können ― in weiteren, hier nicht dargestellten Bearbeitungs-Stufen ― die Fahrzeugkatosserien 2a, 2b, 2c, 2d z.B. entsprechenden Spritz- und/oder Tauchspülprozessen, usw. unterzogen werden, und/oder es können ein oder mehrere Beizprozessschritte durchgeführt werden, z.B. durch Ein- und Austauchen der Fahrzeugkarosserien 2a, 2b, 2c, 2d in ein Beiz-, insbesondere ein Galvanik-Beiz-Bad.

In der Bearbeitungs-Stufe 3d können auch beliebige andere Oberflächen-Bearbeitungsverfahren, als die oben genannten durchgeführt werden, z.B. können entsprechende Lacke auf die Fahrzeugkarosserie 2a, 2b, 2c, 2d aufgesprüht werden, etc.

Nach dem Aufbringen der (Grundlack-)Schicht in der Bearbeitungs-Stufe 3d werden die Fahrzeugkarosserien 2a, 2b, 2c, 2d einer weiteren (hier nicht dargestellten) Bearbeitungs-Stufe zugeführt, wo die Fahrzeugkarosserien 2a, 2b, 2c, 2d - z.B. mittels eines Roboters - hin- und hergekippt bzw. hin- und hergedreht werden, z.B. um möglichst weitgehend überschüssigen, auf der Karosserieoberfläche bzw. in Karosseriehohlräumen vorhandenen, Lack zu entfernen.

Daraufhin wird die in der Bearbeitungs-Stufe 3d aufgebrachte (zunächst noch flüssige) Beschichtung bzw. (Lack-)Schicht in einer Bearbeitungs-Stufe 3e einem Ofen 4 ausgehärtet bzw. getrocknet.

Als nächstes wird die entsprechende Fahrzeugkarosserie 2a, 2b, 2c, 2d einer weiteren, hier nicht dargestellten Bearbeitungs-Stufe zugeführt, wo die jeweilige Fahrzeugkarosserie 2a, 2b, 2c, 2d - z.B. mittels entsprechender Kühlaggregate - abgekühlt wird.

Als nächstes kann die entsprechende Fahrzeugkarosserie 2a, 2b, 2c, 2d einer beliebigen weiteren Bearbeitungs-Stufe zugeführt werden, z.B. einer weiteren Reinigungs- und/oder Oberflächen-Bearbeitungs-Stufe 3f, usw.

Beispielsweise wird in der Bearbeitungs-Stufe 3f - z.B. durch Eintauchen in ein weiteres Bad, oder auf beliebige andere Weise, z.B. mittels entsprechender Sprühtechniken, beispielsweise einem elektrostatischen Lackierverfahren - eine weitere Beschichtung, z.B. eine (weitere) Lackschicht, beispielsweise eine Farb- bzw. Decklackschicht auf die Fahrzeugkarosserie 2a, 2b, 2c, 2d aufgebracht. Bei einem elektrostatischen Lackierverfahren wird mittels entsprechender Roboter 23 Lack auf die Karosserieoberfläche aufgesprüht, wobei das Aufsprühen dadurch unterstützt wird, dass entsprechende elektrische Felder erzeugt werden.

Daraufhin wird die in der Bearbeitungs-Stufe 3f aufgebrachte (zunächst noch flüssige) Beschichtung bzw. (Lack-)Schicht in einer weiteren Beatbeitungs-Stufe mit einem dem in Figur 1 gezeigten Ofen 4 entsprechenden Ofen ausgehärtet bzw. getrocknet.

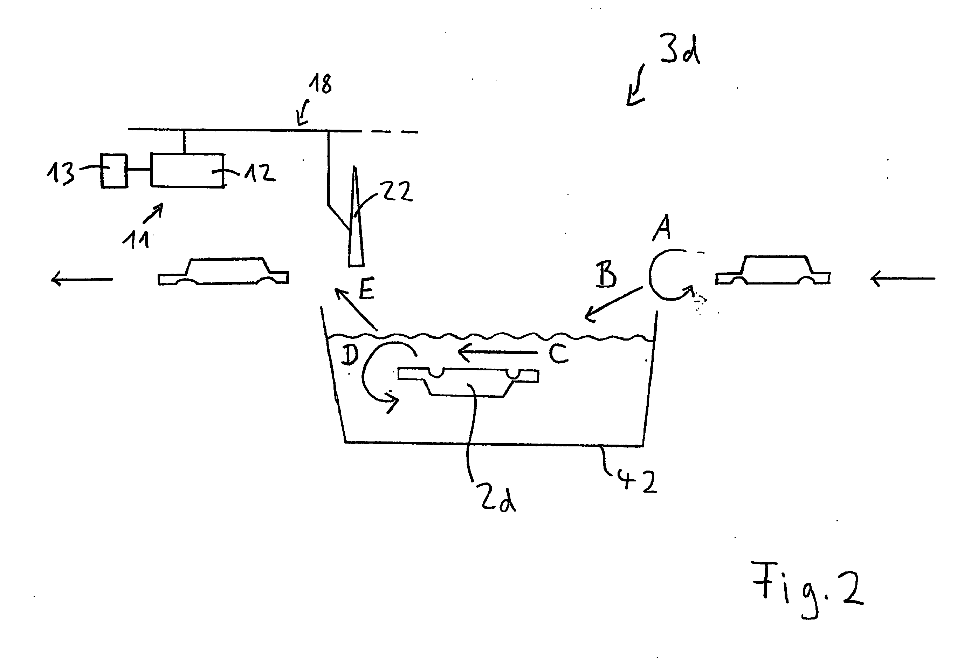

In Figur 2 ist eine schematische, aus Anschauungsgründen vereinfachte Darstellung von in der Lackierstufe 3d durchgeführten Verfahrensschritten gezeigt.

Entsprechende Verfahrensschritte werden z.B. auch in der Reinigungsstufe 3b durchgeführt bzw. in den weiteren oben genannten Stufen, bei denen die Fahrzeugkarosserien 2a, 2b, 2c, 2d in entsprechende Flüssigkeitsbäder ein- und wieder ausgetaucht werden. Diese Verfahrensschritte werden auf entsprechende Weise simuliert und gesteuert, wie im folgenden unter Bezug auf die Lackierstufe 3d erläutert

Wie in Figur 2 dargestellt ist, wird die entsprechende Fahrzeugkarosserie 2a, 2b, 2c, 2d zunächst z.B. mit Hilfe eines hier nicht dargestellten Arms des Roboters 22 um 180° um eine mittig in Längsrichtung durch die entsprechende Fahrzeugkarosserie 2a, 2b, 2c, 2d hindurchgehende Drehachse (vgl. Pfeil A) gedreht (sodass das Karosseriedach dann senkrecht nach unten zeigt), und gleichzeitig mittels einer nach vorne-unten hin gerichteten Bewegung (vgl. Pfeil B) mit der Fahrzeugkarosserie-Front voraus vollständig in das Bad 42 eingetaucht.

Im Bad 42 wird die entsprechende Fahrzeugkarosserie 2a, 2b, 2c, 2d dann weiter nach vome bewegt (Pfeil C), und daraufhin wieder aus dem Bad 42 ausgetaucht. Dabei wird die entsprechende Fahrzeugkarosserie 2a, 2b, 2c, 2d mit Hilfe des Roboters 22 erneut um 180° um eine mittig in Längsrichtung durch die entsprechende Fahrzeugkarosserie 2a, 2b, 2c, 2d hindurchgehende Drehachse (vgl. Pfeil D) gedreht (sodass das Karosseriedach dann wieder senkrecht nach oben zeigt), und gleichzeitig nach vorne-oben hin bewegt (vgL Pfeil E).

Der Arm des Roboters 22 (und damit die beim o.g. Ein- und Austauchvorgang von der Fahrzeugkarosserie 2a, 2b, 2c, 2d vollzogene Bewegung) wird von einer Steuereinrichtung 11 gesteuert, z.B. einem Rechner 12, auf dessen Speichereinrichtung 13 ein entsprechendes Steuer-softwareprogramm abgespeichert ist (Computerprogrammprodukt), und zwar beispielsweise dadurch, dass von der Steuereinrichtung 11 entsprechende Steuersignale an einen Steuerungs-Datenbus 18, und von dort aus an den Roboter 22 ausgegeben werden.

Dabei wird u.a. die Ein- und Austauchgeschwindigkeit der Fahrzeugkarosserie 2a, 2b, 2c, 2d in das Bad 42 gesteuert (insbesondere die Höhe und ggf. der zeitliche Verlauf der Geschwindigkeit bei den nach vome-unten bzw. nach vorne-oben hin, gerichteten Bewegungen (vgL Pfeile B, E), und die Höhe und ggf. der zeitliche Verlauf der Geschwindigkeit bei den Drehbewegungen (vgl. Pfeile A, D), sowie die Höhe und ggf. der zeitliche Verlauf der Geschwindigkeit bei der Vorschubbewegung im Bad 42 (vgL Pfeil C).

Alternativ oder zusätzlich kann durch die Steuereinrichtung 11 z.B. durch Ansteuern des entsprechenden Roboters der nach der Bearbeitungs-Stufe 3d stattfindende Fahrzeugkarosserie-Kippvorgang gesteuert werden (insbesondere die Höhe und der zeitliche Verlauf einer ― auf einer vertikalen Ebene liegenden - Kipp-Geschwindigkeits-Komponente, und/oder die Höhe und der zeitliche Verlauf einer überlagerten ― auf einer horizontalen Ebene liegenden - Dreh-Geschwindigkeits-Komponente, und/oder die Höhe und der zeitliche Verlauf einer überlagerten Vorschubgeschwindigkeit, etc.).

Die Steuereinrichtung 11 (bzw. das Steuer-Softwareprogramm) kann des weiteren auch einen oder mehrere der in den übrigen Bearbeitungs-Stufen 3a, 3b, 3c, 3e, 3f durchgeführten Verfahrensschritte steuern (z.B. die Verweil-Zeitdauer der Fahrzeugkarosserien 2a, 2b, 2c, 2d im Ofen 4 bzw. die Dauer der Aushärte- bzw. Trocknungsperiode, und/oder die Beheizung von aktiven Strahlflächen des Ofens 4, und/oder die Stärke eines von im Ofen 4 vorgesehenen Düsen 5a, 5b, 5c erzeugten Luftstroms, und/oder die Stärke von im Ofen 4 vorgesehenen UV-Strahlern abgegebener Strahlung, etc.)

Wie in Figur 1 gezeigt ist, kann die Steuereinrichtung 11 hierzu z.B. über den o.g. Steuerungs-Datenbus 18 außer mit der Bearbeitungs-Stufe 3d zusätzlich auch mit der Bearbeitungs-Stufe 3a und/oder der Bearbeitungs-Stufe 3b und/oder der Bearbeitungs-Stufe 3c und/oder der Bearbeitungs-Stufe 3e und/oder der Bearbeitungs-Stufe 3f und/oder einer oder mehreren zwischen bzw. vor oder nach diesen Bearbeitungs-Stufen 3a, 3b, 3c, 3d, 3e, 3f angeordneten Bearbeitungs-Stufen verbunden sein, und die entsprechenden Parameter der dort stattfindenden Knosserieoberflächen-Behandlungsprozesse entsprechend steuern (z.B. durch entsprechendes Ansteuern von Robotern 20, 21, 23, etc.). Alternativ können die entsprechenden Prozessparameter der Bearbeitungs-Stufen 3a, 3b, 3c, 3d, 3e, 3f auch durch eine oder mehrere separate Steuereinrichtungen separat voneinander gesteuert werden.

Bei den Bearbeitungs-Stufen 3b, 3d (und alternativ entsprechend zusätzlich auch bei den Bearbeitungs-Stufen 3a, 3c, 3e, 3f) kann es u.a. aus den folgenden Gründen von hohem Interesse sein, für eine optimale Einstellung der entsprechenden Prozessparameter (d.h. für eine entsprechende Einstellung des Steuer-Softwareprogramms) zu sorgen:

Beispielsweise können beim Eintauchen der Fahrzeugkarosserie 2a, 2b, 2c, 2d in das bei den Bearbeitungsstufen 3b, 3d vorgesehene Bad 41, 42 in Karosserie-Hohlräumen Luftblasen eingeschlossen werden; diese verhindern, dass der entsprechende Hohlraum vollständig mit Flüssigkeit benetzt wird.

Des weiteren können die eingeschlossenen Luftblasen derart hohe Auftriebskräfte zur Folge haben, dass die Schalenstruktur der Fahrzeugkarosserie 2a, 2b, 2c, 2d beschädigt, z.B. verbeult wird.

Außerdem kann eine entsprechend ungünstige Einstellung der Prozessparameter (und eine entsprechend ungünstige Ausgestaltung der Fahrzeugkarosserie 2a, 2b, 2c, 2d) zur Folge haben, dass ― selbst nach dem z.B. in der Bearbeitungsstufe 3c stattfindenden Fahrzeugkarosserie-Kipp- bzw. Drehvorgang - in Senken der Fahrzeugkarosserie Flüssigkeitsreste verbleiben, die nachfolgende Prozeßschritte beeinträchtigen können.

Des weiteren kann es auch von hohem Interesse sein, vorab festzustellen, ob z.B. aufgrund ungünstiger Anordnung von in der Karosserie vorgesehenen Öffnungen der Einschluß von Luftblasen in Karosserie-Hohlräumen beim Eintauchen, und/oder der Verbleib von Flüssigkeitsresten in Karosserie-Senken beim Austauchen prinzipiell nicht bzw. nicht ausreichend verhindert werden kann (die Form der Fahrzeugkarosserie 2a, 2b, 2c, 2d muß dann nachträglich geändert werden, z.B. durch Vorsehen zusätzlicher Entlüftungsöffnungen zum Austritt von Luft beim Eintauchen, und/oder von zusätzlichen Drainageöffnungen zum Austritt von Flüssigkeit beim Austauchen).

Dies - und/oder das optimale Einstellen der Prozessparameter bei vorgegebener Ausgestaltung der Fahrzeugkarosserien 2a, 2b, 2c, 2d und der Bearbeitungs-Stufen 3b, 3d (bzw. zusätzlich der Bearbeitungsstufen 3a, 3c, 3e, 3f) - wird hier nicht (bzw. nicht ausschließlich) mit Hilfe einer "Trial and Error"-Methode (unter Verwendung von Fahrzeugkarosserie-Prototypen) erreicht

Stattdessen wird z.B. am Rechner 12 der Steuereinrichtung 11 (oder an einem beliebigen weiteren Rechner, der nicht mit den Bearbeitungs-Stufen 3a, 3b, 3c, 3d, 3e, 3f verbunden zu sein braucht) mit Hilfe eines auf dessen Speichereinrichtung 13 oder einer beliebigen anderen Speichereinrichtung gespeicherten Simulations-Softwateprogramms (Computerprogrammprodukt) eine Simulation der bei den entsprechenden Stufen stattfindenden Prozesse durchgeführt. Diese Simulation kann einer eigenen Methodik unterliegen, sich der Finite-Elemente-Methode (FEM bzw. Finite Elements Method) bedienen, oder eine Kombination aus einer eigenen, originären Methodik und einer FEM-Methodik darstellen.

Die ermittelten Prozessparameter bzw. die ermittelten Prozessparameter repräsentierende Daten werden dann vom Simulations-Softwareprogramm an das Steuersoftware-Programm übergeben (- alternativ kann die Funktion des Simulations- und des Steuersoftware-Programms z.B. auch von ein- und demselben Softwareprogramm erfüllt werden -), so dass die Steuereinrichtung 11 (bzw. das Steuer-Softwareprogramm) dann bei der Oberflächenbehandlung von reell vorhanden Fahrzeugkarosserien 2a, 2b, 2c, 2d die entsprechenden, bei den Bearbeitungsstufen 3b, 3d (bzw. zusätzlich bei den Bearbeitungs-Stufen 3a, 3c, 3e, 3f) durchgeführten Prozesse entsprechend steuert.

Bei einem alternativen Ausführungsbeispiel erfolgt bei der Simulation lediglich eine Grobeineinstellung der Prozessparameter. Die Feineinstellung der Prozessparameter erfolgt - im Anschluß an die Simulation - mit Hilfe eines den herkömmlichen "Trial and Error"-Verfahren entsprechenden "Trial and Error"-Verfahrens (d.h., indem mit Hilfe von Fahrzeugkarosserie-Prototypen an den Bearbeitungs-Stufen 3b, 3d (und alternativ entsprechend zusätzlich auch an den Bearbeitungs-Stufen 3a, 3c, 3e, 3f) entsprechende Versuchsreihen durchgeführt werden).

Alternativ wird zunächst mit vorgegebenen (z.B. auf Erfahrungswerten) beruhenden Prozessparametern simuliert. Daraufhin wird das Ergebnis der Simulation einer Beurteilung unterzogen, und - bei unbefriedigendem Ergebnis ― die Prozessparameter und/oder die Ausgestaltung der Fahrzeugkatosserien 2a, 2b, 2c, 2d geändert. Daraufhin kann eine erneute Simulation des Prozesses durchgeführt werden, woraufhin wiederum - bei unbefriedigendem Ergebnis ― die Prozessparameter und/oder die Ausgestaltung der Fahrzeugkarosserien 2a, 2b, 2c, 2d geändert werden können, usw.

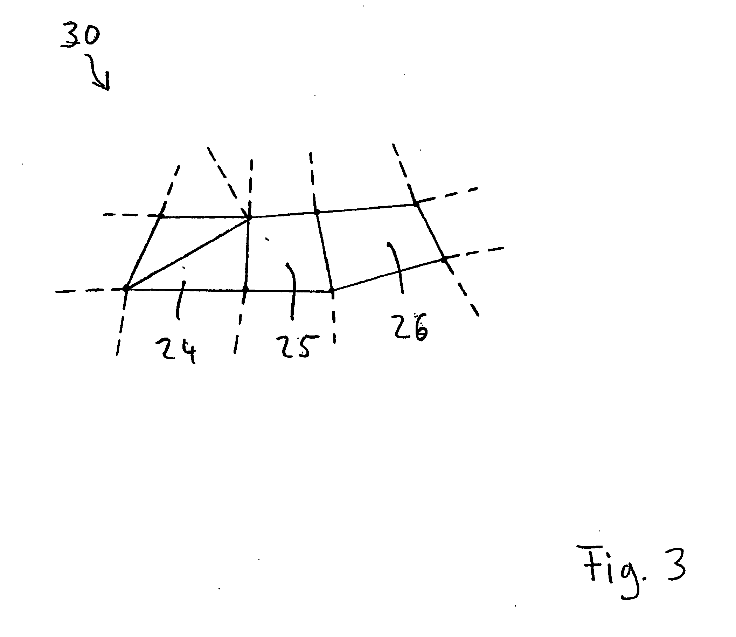

Zur Simulation der o.g. Prozesse wird gemäß Figur 3 ein Finite-Element-Modell 30 der jeweiligen Fahrzeugkarosserie 2a, 2b, 2c, 2d verwendet (vorzugsweise wird hier bei der Simulation mehrerer, insbesondere sämtlicher untersuchter Prozesse ein- und dasselbe Finite-Element-Modell verwendet). Um dieses zu erzeugen, kann ein (zur Berechnung bzw. Simulation anderer Größen, z.B. der mechanischen Beanspruchung der Fahrzeugkarosserie 2a, 2b, 2c, 2d verwendetes) Rechennetz verwendet werden, welches in die Speichereinrichtung 13 des Rechners 12 eingelesen wird.

Das Mechanik-Simulations-Rechennetz wird dann so angepasst, dass es - wie hier - zur Simulation der o.g. Oberflächenbehandlungs-Vorgänge verwendet werden kann.

Beim zur Simulation verwendeten Finite-Elemente-Modell 30 der jeweiligen Fahrzeugkarosserie 2a, 2b, 2c, 2d sind, wie in Figur 3 dargestellt, die Fahrzeugkarosserieflächen jeweils in eine Vielzahl von jeweils zwischen mehreren, z.B. drei oder vier Bezugspunkten aufgespannten, aneinander angrenzende (z.B. ebene) Bezugsflächen unterteilt (finite Karosserieflächen-Elemente 24, 25, 26 bzw. "Zellen").

Mit dem Simulations-Softwareprogramm werden unter Verwendung des Finite-Elemente-Modells 30 zum einen Bereiche der Fahrzeugkarosserie 2a, 2b, 2c, 2d ermittelt, in denen - beim Eintauchen ins Bad 41, 42 - Luftblasen eingeschlossen werden können (im folgenden "Taschen" genannt).

Alternativ oder zusätzlich können mit dem Simulations-Softwareprogramm - ebenfalls unter Verwendung des Finite-Elemente-Modells 30 - auch Fahrzeugkarosserie-Bereiche ermittelt werden, in denen sich - beim Austauchen aus dem Bad 41, 42 - Flüssigkeit ansammeln kann (im folgenden "Tassen" genannt).

Die Identifizierung der Taschen bzw. Taschen erfolgt (bei einer ersten Variante) rein aus der Blechgeometrie, sowie der (momentanen) Lage bzw. (Winkel-)Stellung der Fahrzeugkarosserie 2a, 2b, 2c, 2d in Bezug auf eine Bezugsfläche, z.B. eine horizontal verlaufenden Ebene bzw. die Oberfläche der im Bad 41, 42 vorhandenen Flüssigkeit.

Die Taschen bzw. Tassen werden identifiziert, indem ― in Bezug auf die o.g. Bezugsfläche ― in der Blechgeometrie vorhandene lokale Maxima bzw. Minima ermittelt werden.

Zur Simulation von z.B. dem Abfluss von Flüssigkeit aus der Fahrzeugkarosserie 2a, 2b, 2c, 2d beim Austauchen werden nacheinander eine bestimmte Anzahl von Stellungen der Fahrzeugkarosserie 2a, 2b, 2c, 2d untersucht, die die Fahrzeugkarosserie 2a, 2b, 2c, 2d während des Austauchvorgangs einnimmt (z.B. 5 - 500, insbesondere 10 - 100 verschiedene, aufeinanderfolgende Stellungen). Als erste Stellung kann dabei z.B. eine Stellung verwendet werden, die die Fahrzeugkarosserie 2a, 2b, 2c, 2d unmittelbar nach Beginn des Austauchvorgangs einnimmt (Startposition der Fahrzeugkarosserie 2a, 2b, 2c, 2d relativ zur Flüssigkeitsoberfläche).

Auf entsprechende Weise kann zur Simulation von z.B. dem Ausströmen von Luft aus der Fahrzeugkarosserie 2a, 2b, 2c, 2d beim Eintauchen nacheinander eine bestimmte Anzahl von Stellungen der Fahrzeugkarosserie 2a, 2b, 2c, 2d untersucht werden, die die Fahrzeugkarosserie 2a, 2b, 2c, 2d während des Eintauchvorgangs einnimmt (z.B. 5 - 500, insbesondere 10 - 100 verschiedene, aufeinanderfolgende Stellungen). Als erste Stellung kann dabei z.B. eine Stellung verwendet werden, die die Fahrzeugkarosserie 2a, 2b, 2c, 2d unmittelbar nach Beginn des Eintauchvorgangs einnimmt (Startposition der Fahrzeugkarosserie 2a, 2b, 2c, 2d relativ zur Flüssigkeitsoberfläche).

Bei jeder Stellung werden - anhand der o.g. lokalen Maxima bzw. Minima der Blechgeometrie in Bezug auf die Bezugsfläche, sowie z.B. anhand von Austrittsmöglichkeiten für Flüssigkeit /Luft, z.B. der Lage von Drainageöffnungen / Entlüftungsöffnungen - die Lage (und alternativ zusätzlich die jeweilige Menge) von angesammelter Flüssigkeit / eingeschlossener Luft ermittelt. Zur Ermittlung der jeweiligen Menge der angesammelten Flüssigkeit / der eingeschlossenen Luft kann z.B. für die jeweils geltende Winkelstellung der Fahrzeugkarosserie 2a, 2b, 2c, 2d in Bezug auf die o.g. Bezugsfläche das Volumen der jeweiligen lokalen Maxima bzw. Minima bzw. der jeweiligen Tasse bzw. Tasche bestimmt werden (s.u.)

Diese für eine bestimmte Stellung der Fahrzeugkarosserie 2a, 2b, 2c, 2d ermittelten Daten (Lage (und alternativ zusätzlich die Menge) von angesammelter Flüssigkeit / eingeschlossener Luft) werden dann dazu verwendet, für die darauffolgende Stellung der Fahrzeugkarosserie 2a, 2b, 2c, 2d eine entsprechende Simulation durchzuführen, wie bei der vorangegangenen Stellung, usw. Zur Ermittlung der bei der darauffolgenden Stellung jeweils angesammelten Flüssigkeitsmengen / eingeschlossenen Luftmengen kann z.B. für die dann geltende Winkelstellung der Fahrzeugkarosserie 2a, 2b, 2c, 2d in Bezug auf die o.g. Bezugsfläche das (geänderte) Volumen der jeweiligen lokalen Maxima bzw. Minima bzw. der jeweiligen Tasse bzw. Tasche bestimmt werden (einem geänderten Volumina entspricht jeweils ein Abfluß (ggf. Zufluß) von Flüssigkeit / ein Ausstrom (ggf. Zustrom) von Luft).

Wird lediglich die Lage, nicht aber die Menge von angesammelter Flüssigkeit / eingeschlossener Luft ermittelt, können lediglich grob die Bereiche, für die zusätzliche Drainage- bzw. Entlüftungsmaßnahmen notwendig sind, lokalisiert werden (nicht aber etwa die notwendige Größe zusätzlicher Drainage- bzw. Entlüftungsöffnungen, etc.).

Die Simulation insgesamt wird also in mehreren, aufeinanderfolgenden Simulations-Schritten durchgeführt. Hierbei werden einzelne, zur Simulation eines Einzelschritts ausgelegte Programmteile des Simulations-Softwareprogramms mehrfach aufeinanderfolgend durchlaufen. Damit diese Programmteile kurze Antwortzeiten liefern, werden bei der o.g. Einzelschritt-Simulation Fahrzeugkarosserie- bzw. Blechgeometrie-Nachbarbeziehungsdaten verwendet, die nur einmal - zu Beginn der Simulation - festgelegt werden müssen.

Die Lage (und ggf. zusätzlich das Volumen) von vom Simulations-Softwareprogramm ermittelten Taschen / Tassen wird - auf Basis des Finite-Elemente-Modells 30 - an einer mit der Steuereinrichtung 11 verbundenen Anzeigeeinrichtung, z.B. einem Bildschirm angezeigt, wobei Taschen bzw. Tassen am Bildschirm z.B. jeweils auf unterschiedliche Weise farblich hervorgehoben werden können.

Bei der hier erläuterten (ersten) Variante des Simulations-Softwareprogramms werden entsprechend den Ausführungen oben die Eigenschaften des Fluids nicht berücksichtigt; es wird davon ausgegangen, dass die Flüssigkeit / Luft - unabhängig z.B. von der Größe der jeweiligen Drainageöffnung / Entlüftungsöffnung bzw. z.B. der Lage der jeweils überströmten Elementkante in Bezug auf die Bezugsfläche - unendlich schnell abfließen / ausströmen kann (d.h. es wird stets von 100% Abfluß / Ausströmung ausgegangen, Strömungswiderstände werden nicht berücksichtigt, und dadurch auch keine Zeitbedingungen beim Füllen / Entleeren von Teilvolumina, d.h. der Zeitbereich wird quasi-statisch aufgelöst, die Simulation beruht auf einer rein geometrischen Betrachtungsweise).

Des weiteren werden auch Oberflächenspannungseffekte und die Viskosität der Flüssigkeit nicht berücksichtigt, d.h. z.B., dass Effekte wie das Nicht-Eindringen der Flüssigkeit in schmale Spalte aufgrund der Oberflächenspannung nicht erfasst werden.

Außerdem werden ab- und auftropfende Flüssigkeitsmengen nicht erfasst.

Bei alternativen Varianten des Simulations-Softwareprogramms werden demgegenüber eine oder mehrere der o.g. (bei der ersten Variante nicht berücksichtigten) Effekte bei der Simulation mit berücksichtigt.

Beispielsweise werden bei einer zweiten Variante die Strömungswiderstände (z.B. der jeweiligen Drainageöffnung / Entlüftungsöffnung bzw. der jeweils überströmten Elementkante) beim Fließen von Flüssigkeit bzw. Strömen von Luft berücksichtigt (d.h. es kann - je nach der Zeitdauer, die die Fahrzeugkarosserie 2a, 2b, 2c, 2d benötigt, um beim Ein- bzw. Austauchen von einer bestimmten, jeweils betrachteten Stellung zur darauffolgend betrachteten Stellung zu gelangen - zu einem Abfluß / einer Ausströmung kommen, die kleiner ist als 100%. Mit anderen Worten wird im Zeitbereich gerechnet, wobei sich die Simulation jedoch auf einzelne, definierte Zeitschritte stützt).

Zusätzliche, die Ein-/Ausströmung verbessernde bzw. verschlechternde Effekte durch das Sttömungsumfeld werden nicht berücksichtigt.

Bei einer weiteren Variante des Simulations-Softwareprogramms wird bei der Simulation zusätzlich auch die jeweilige Abscheidungsmenge der Flüssigkeit, insbesondere an geneigten Flächen berücksichtigt.

Wie bereits erläutert, kann zur Beschreibung des zu berechnenden Körpers ein Modell basierend auf der Finite-Element-Methode (FEM bzw. Finite Elements Methods) verwendet werden ― z.B. aus Crash-Berechnungen, oder eine bei Computer-Aided-Design (CAD) übliche Geometriebeschreibung.

Dieses Netz wird automatisch oder semi-automatisch klassifiziert Die Umsetzung erfolgt dabei über das Einlesen einer ASCII-Datei (d.h. es erfolgt keine enge Programmierung z.B. in ANSYS). Damit wird u.a. eine hohe Flexibilität gegenüber anderen FEM-Lösungen (Einlesen von NASTRAN-Decks etc.) erreicht

Bei der Klassifizierung wird u.a. unterschieden zwischen ebenen Flächen, und Öffnungen; den ebenen Flächen werden z.B. Attribute wie Lage zur Oberfläche im Wasserbad zugeteilt, und den Öffnungen Attribute wie z.B. Größe, Lage, etc.

Vor der dieser (ersten, grundlegenden) Klassifizierung werden Nachbarbeziehungen von Elementen und Knoten erfaßt und abgespeichert Damit entfällt späteres Suchen; die Effizienz der Analyse wird erhöht.

Als nächstes werden - für die jeweiligen Winkel der Fahrzeugkarosserie 2a, 2b, 2c, 2d (d.h. für jeden bei der Simulation des Gesamtprozesses, d.h. beim Eintauchen, beim Durchführen der Karosserie durchs Bad, sowie beim Austauchen verwendeten Berechnungsschritt) - Taschen- bzw. Tassen-Keime (lokale / globale Minima /Maxima) identifiziert, und abgespeichert. Das Netz der Karosserie dreht sich, d.h. der Winkel ändert sich relativ zum Flüssigkeitsspiegel.

Die Taschen- bzw. Tassen-Keime werden expandiert, bis ein Rand bzw. eine Öffnung erreicht wird. Hierzu werden die o.g. Nachbarbeziehungen verwendet

Als nächstes wird (ggf.) das Taschen- bzw. Tassen-Volumen bestimmt, und dann die Taschen- bzw. Tassen-Wanderung bei Winkeländerung, und als letztes dann die Taschen bzw. Tassen bzw. die Zulaufflächen bei der Endlage Fahrzeugkarosserie 2a, 2b, 2c, 2d. Alternativ wird ― wie bereits oben erläutert ― ein An- und/oder Abtropfen von Flüssigkeit berücksichtigt.

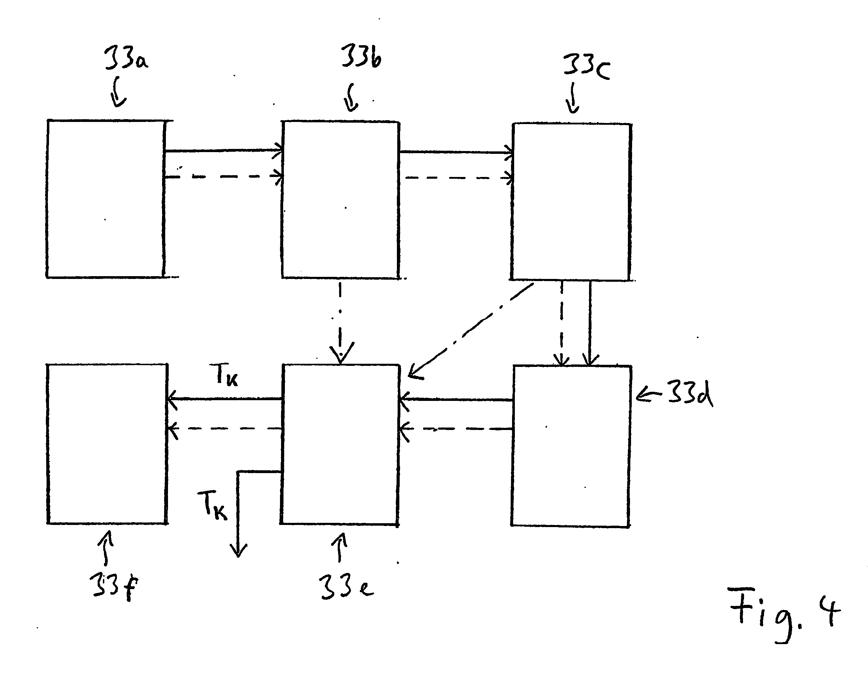

Wie in Figur 4 gezeigt ist, weist das ― auf der Speichereinrichtung 13 abgespeicherte - Simulations-Softwareprogramm (oder alternativ: das kombinierte Simulations-/Steuerungs-Softwareprogramm) eine Vielzahl von Software-Modulen 33a, 33b, 33c, 33d, 33e, 33f auf. Jedes Software-Modul 33a, 33b, 33c, 33d, 33e, 33f dient der Simulation der in einer bestimmten Bearbeitungs-Stufe 3a, 3b, 3c, 3d, 3e, 3f stattfindenden Karosserieoberflächen-Behandlungs-Prozesse (z.B. dient das Software-Modul 33a der Simulation des in der Bearbeitungs-Stufe 3a stattfindenden Karosserieoberflächen-Behandlungs-Prozesses, das Software-Modul 33b der Simulation des in der Bearbeitungs-Stufe 3b stattfindenden Karosserieoberflächen-Behandlungs-Prozesses, das Software-Modul 33c der Simulation des in der Bearbeitungs-Stufe 3c stattfindenden Karosserieoberffächen-Behandlungs-Prozesses, das Software-Modul 33d der Simulation des in der Bearbeitungs-Stufe 3d stattfindenden Karosserieoberflächen-Behandlungs-Prozesses, usw.).

Jedes Software-Modul 33a, 33b, 33c, 33d, 33e, 33f ist so programmiert, dass es alternativ auch unabhängig von den bzw. ohne die anderen Software-Module(n) auf die Speichereinrichtung 13 geladen, und/oder selbständig ― d.h. unabhängig von den anderen Software-Modulen - zur Simulation des in der dem jeweiligen Softwate-Modul 33a, 33b, 33c, 33d, 33e, 33f zugeordneten Bearbeitungs-Stufe 3a, 3b, 3c, 3d, 3e, 3f stattfindenden Karosserieoberflächen-Behandlungs-Prozesses verwendet werden kann.

Alternativ können z.B. jeweils mehrere (z.B. zwei oder drei) verschiedene Software-Module 33a, 33b, 33c, 33d, 33e, 33f unabhängig von den bzw. ohne die übrigen Software-Module(n) auf die Speichereinrichtung 13 geladen, und/oder selbständig ― d.h. unabhängig von den übrigen Softwate-Modulen - zur Simulation der in den den jeweiligen Softwate-Modulen 33a, 33b, 33c, 33d, 33e, 33f zugeordneten Bearbeitungs-Stufen 3a, 3b, 3c, 3d, 3e, 3f stattfindenden Karosserieoberflächen-Behandlungs-Prozesse verwendet werden.

Bei der Erfindung ist erkannt worden, dass die in den einzelnen Bearbeitungs-Stufen 3a, 3b, 3c, 3d, 3e, 3f stattfindenden Karosserieoberflächen-Behandlungs-Prozesse nicht voneinander unabhängig sind, sondern sich wechselseitig beeinflussen können.

Beispielsweise beeinflusst der bei der Simulation des in der Bearbeitungs-Stufe 3e stattfindenden Trocknungs- bzw. Aushärtungsvorgangs ermittelte Karosserie-Temperaturwert T_{K} (bzw. beeinflussen die verschiedenen, für die einzelnen finiten Karosserieflächen-Elemente 24, 25, 26 ermittelten Temperaturwerte) den in der darauffolgenden Bearbeitungs-Stufe 3f stattfindenden Beschichtungs- bzw. Lackierprozess. Deshalb wird gemäß Figur 4 der entsprechende Temperaturwert T_{K} bzw. ein die Temperaturen sämtlicher oder ausgewählter finiter Karosserieflächen-Elemente 24, 25, 26 beschreibender Temperaturwerte-Vektor T_{K}) vom Software-Modul 33e an das Software-Modul 33f übergeben (und/oder alternativ auch an weitere, den entsprechenden Parameter verwendende Software-Module). Der entsprechende Temperaturwert T_{K} bzw. der Temperaturwerte-Vektor T_{K} wird dann vom Software-Modul 33f zur Durchführung der Simulation des in der Bearbeitungs-Stufe 3f stattfindenden Beschichtungs- bzw. Lackierprozess verwendet.

Ein weiteres Beispiel für eine wechselseitige Beeinflussung zwischen verschiedenen Karosserieoberflächen-Behandlungs-Prozessen sind sog. Verschleppungen. Beispielsweise können die o.g. Bäder 41, 42, etc. einer bestimmten Bearbeitungs-Stufe durch (aufgrund von in vorangegangenen Bearbeitungs-Stufen durchgeführten Prozessen noch auf der Fahrzeugkarosserie 2a, 2b, 2c, 2d bzw. in Karosseriehohlräumen befindlichem) flüssigen Lack bzw. Reinigungsflüssigkeitsreste verschmutzt werden.

Deshalb kann ein oder können mehrere die Verschmutzung bzw. Verschleppung beschreibende Parameter z.B. von dem entsprechenden, der jeweiligen die Verschleppung verursachenden Bearbeitungs-Stufe zugeordneten Software-Modul an das entsprechende, den darauffolgenden Lackierungs- oder Reinigungsprozeß simulierende Software-Modul übergeben werden. Die entsprechenden Parameter werden dann ― ggf. zusammen mit vielen weiteren Parametern - vom Lackierungs- bzw. Reinigungsprozeß-Simulations-Modul zur Simulation des Lackierungs- bzw. Reinigungsptozesses verwendet.

Des weiteren kann z.B. der o.g. Beschichtungs- bzw. Lackier-Prozess (Bearbeitungs-Stufe 33e) z.B. den in der Bearbeitungs-Stufe 3e stattfindenden Trocknungs- bzw. Aushärtungs-Prozess beeinflussen.

Beispielsweise können den Ort und/oder die Menge von in Senken der Fahrzeugkarosserie 2a, 2b, 2c, 2d verbliebenen Flüssigkeitsresten beschreibende Parameter z.B. von dem entsprechenden Software-Modul 33d an das entsprechende, den darauffolgenden Trockmungs- bzw. Aushärtungs-Prozess simulierende Softwate-Modul 33e übergeben werden, und/oder die Beschichtungsdicke in Abhängigkeit vom jeweiligen Ort der Fahrzeugkarosserie beschreibende Parameter, etc.

## Patentansprüche

1. Verfahren zur Simulation von Produktions- und/oder Produktionsvorbereitungs- und/oder Ptoduktions-Nachbehandlungsprozessen,
**dadurch gekennzeichnet, dass** das Verfahren den Schritt aufweist:
- Simulation eines Ein- und/oder Austauchprozesses einer Fahrzeug-Karosserie (2a, 2b, 2c, 2d) in ein bzw. aus einem Flüssigkeitsbad (41, 42) unter Verwendung eines Finite-Elemente-Modells der Fahrzeug-Karosserie, wobei bei der Simulation die Lage von Bereichen der Fahrzeug-Karosserie, in denen während des Eintauchprozesses Luft eingeschlossen wird, und/oder in denen sich während des Austauchprozesses Flüssigkeit ansammeln ermittelt wird.

2. Verfahren nach Anspruch 1, wobei das Flüssigkeitsbad (41) ein Reinigungsbad ist.

3. Verfahren nach Anspruch 1 oder 2, wobei das Flüssigkeitsbad (42) ein Beschichtungs-, insbesondere ein Lackierbad ist.

4. Verfahren nach einem der vorhergehenden Ansprüche, wobei mindesten ein bei der Simulation des Ein- bzw. Austauch- bzw. Bewegungsprozesses ermittelter Parameter zur Simulation eines weiteren Produktions- bzw. Produktionsvorbereitungs- bzw. Produktions-Nachbehandlungsprozesses verwendet wird.

5. Verfahren nach Anspruch 4, wobei der weitere Produktions- bzw. Produktionsvorbereitungs- bzw. Produktions-Nachbehandlungsprozess ein Trocknungs- bzw. Aushärtungsprozess ist, oder ein Beschichtungsprozess, insbesondere ein kathodischer Tauchlackietungsprozess oder ein elektrostatischer Sprühlackierungsprozess.

6. Verfahren nach Anspruch 4 oder 5, wobei der weitere Produktions- bzw. Produktionsvorbereitungs- bzw. Produktions-Nachbehandlungsprozess an einer Bearbeitungs-Stelle (3e) durchgeführt wird, die örtlich von derjenigen Bearbeitungs-Stelle (3d) entfernt ist, an der Ein- bzw. Austauchprozesses durchgerührt wird.

7. Verfahren nach einem der Ansprüche 4 bis 6, wobei die Simulation des Ein- bzw. Austauch- bzw. Bewegungsprozesses der Fahrzeug-Karosserie durch ein erstes Modul (33d), und die Simulation des weiteren Produktions- bzw. Produktionsvorbereitungs- bzw. Produktions-Nachbehandlungsprozesses durch ein zweites Modul (33e) durchgeführt wird.

8. Verfahren nach Anspruch 7, wobei das erste Modul (33d) auch unabhängig vom zweiten Modul (33e), und/oder das zweite Modul (33e) auch unabhängig vom ersten Modul (33d) verwendet werden kann.

9. Verfahren nach einem der vorhergehenden Ansprüche, wobei bei der Simulation des Ein- bzw. Austauchprozesses in das bzw. aus dem Flüssigkeitsbad Ein- bzw. Auströmgeschwindigkeiten in bzw. aus Teile(n) der Fahrzeug-Karosserie (2a, 2b, 2c, 2d) vernachlässigt werden.

10. Verfahren nach einem der Ansprüche 1 bis 8, wobei bei der Simulation des Ein- bzw. Austauchprozesses in das bzw. aus dem Flüssigkeitsbad Ein- bzw. Ausströmgeschwindigkeiten in bzw. aus Teile(n) der Fahrzeug-Karosserie (2a, 2b, 2c, 2d) berücksichtigt werden.

11. Verfahren nach einem der vorhergehenden Ansprüche, wobei bei der Simulation des Ein- bzw. Austauchprozesses in das bzw. aus dem Flüssigkeitsbad im Flüssigkeitsbad abtropfende und/oder auftropfende Flüssigkeitsmengen vernachlässigt werden.

12. Verfahren nach einem der Ansprüche 1 bis 10, wobei bei der Simulation des Ein- bzw. Austauchprozesses in das bzw. aus dem Flüssigkeitsbad abtropfende und/oder auftropfende Flüssigkeitsmengen berücksichtigt werden.

13. Verfahren nach einem der vorhergehenden Ansprüche, wobei die Simulation des Ein- bzw. Austausch- bzw. Bewegungsprozesses im wesentlichen auf die Fahrzeug-Karosserie (2a, 2b, 2c, 2d) beschreibenden Geometriedaten und deren Winkel-Lage in Bezug auf eine Bezugsebene, insbesondere die Oberfläche der Flüssigkeit beruht.

14. Vorrichtung (11) zur Simulation von Produktions- und/oder Produktionsvorbereitungs- und/oder Produktions-Nachbehandlungsprozessen, welche so ausgestaltet und eingerichtet ist, dass durch sie ein Simulations-Verfahren nach einem der Ansprüche 1 bis 10 durchgeführt werden kann.

## Claims

1. A method for simulating production and/or production preparatory and/or production post treatment processes,
**characterized in that** the method comprises the step of:
- simulating an immersing and/or emerging process of a vehicle carriage (2a, 2b, 2c, 2d) in and/or from a liquid bath (41, 42) by use of a finite element model of the vehicle carriage, whereby with the simulation the position of regions of the vehicle carriage is determined in which air is included during the immersion, and/or in which liquid is collected during the emersion.

2. The method according to claim 1, wherein said liquid bath (41) is a cleaning bath.

3. The method according to claims 1 or 2, wherein said liquid bath (42) is a coating bath, in particular a varnishing bath.

4. The method according to any of the preceding claims, wherein at least one parameter determined during the simulation of the immersing and/or emerging and/or movement process is used for simulating a further production and/or production preparatory and/or production post treatment process.

5. The method according to claim 4, wherein the further production and/or production preparatory and/or production post treatment process is a drying and/or thermosetting process, or a coating process, in particular a cathodic dip-coating process or an electrostatic spray coating process.

6. The method according to claims 4 or 5, wherein the further production and/or production preparatory and/or production post treatment process is performed at a processing place (3e) that is locally separated from the processing place (3d) at which the immersing and/or emerging process is performed.

7. The method according to any of claims 4 to 6, wherein the simulation of the immersing and/or emerging and/or movement process of the vehicle carriage is performed by a first module (33d), and the simulation of the further production and/or production preparatory and/or production post treatment process is performed by a second module (33e).

8. The method according to claim 7, wherein said first module (33d) can also be used independently of said second module (33e), and/or said second module (33e) can also be used independently of said first module (33d).

9. The method according to any of the preceding claims, wherein, during the simulation of the immersing and/or emerging process in and/or from the liquid bath, inflow or effusion speeds in and/or from part(s) of said vehicle carriage (2a, 2b, 2c, 2d) are neglected.

10. The method according to any of claims 1 to 8, wherein, during the simulation of the immersing and/or emerging process in and/or from the liquid bath, inflow or effusion speeds in and/or from part(s) of the vehicle carriage (2a, 2b, 2c, 2d) are taken into account.

11. The method according to any of the preceding claims, wherein, during the simulation of the immersing and/or emerging process in and/or from the liquid bath, liquid amounts that are dripping off and/or dripping on are neglected.

12. The method according to any of claims 1 to 10, wherein, during the simulation of the immersing and/or emerging process in and/or from the liquid bath, liquid amounts that are dripping off and/or dripping on are taken into account.

13. The method according to any of the preceding claims, wherein the simulation of the immersing and/or emerging process is substantially based on geometry data describing said vehicle carriage (2a, 2b, 2c, 2d) and on the angular position thereof with respect to a reference plane, in particular the surface of the liquid.

14. A device (11) for simulating production and/or production preparatory and/or production post treatment processes, said device being designed and configured such that it is adapted to perform a simulation method according to any of claims 1 to 10.

## Revendications

1. Procédé de simulation de processus de production et/ou de processus préparatoires de production et/ou de processus de post-traitement de production,
**caractérisé en ce que** le procédé comporte l'étape de :
- simulation d'un processus d'immersion et/ou d'émersion d'une carrosserie de véhicule (2a, 2b, 2c, 2d) respectivement dans un ou hors d'un bain de liquides (41, 42) en utilisant un modèle à éléments finis de la carrosserie de véhicule, en détectant lors de la simulation l'emplacement de parties de la carrosserie de véhicule, dans lesquelles de l'air est inclus pendant le processus d'immersion et/ou dans lesquelles des liquides se sont accumulés pendant le processus d'émersion.

2. Procédé selon la revendication 1, dans lequel le bain de liquides (41) est un bain de nettoyage.

3. Procédé selon la revendication 1 ou 2, dans lequel le bain de liquides (42) est un bain de revêtement, notamment un bain de peinture.

4. Procédé selon l'une des revendications précédentes, dans lequel au moins un paramètre déterminé lors de la simulation du processus d'immersion ou d'émersion ou de mise en mouvement est utilisé pour simuler un autre processus de production ou processus préparatoire de production ou processus de post-traitement de production.

5. Procédé selon la revendication 4, dans lequel l'autre processus de production ou processus préparatoire de production ou processus de post-traitement de production est un processus de séchage ou de durcissement, ou un processus de revêtement, notamment un processus de peinture au trempé cathodique ou un processus de peinture par pulvérisation électrostatique.

6. Procédé selon la revendication 4 ou 5, dans lequel l'autre processus de production ou processus préparatoire de production ou processus de post-traitement de production est réalisé dans une station de traitement (3e) qui est localement distante de la station de traitement (3d) où se déroule le processus d'immersion ou d'émersion.

7. Procédé selon l'une des revendications 4 à 6, dans lequel la simulation du processus d'immersion ou d'émersion ou de mise en mouvement de la carrosserie de véhicule est effectuée dans un premier module (33d), et la simulation de l'autre processus de production ou processus préparatoire de production ou processus de post-traitement de production est réalisée dans un second module (33e).

8. Procédé selon la revendication 7, dans lequel le premier module (33d) peut être également utilisé indépendamment du second module (33e), et/ou le second module (33e) peut être aussi utilisé indépendamment du premier module (33d).

9. Procédé selon l'une des revendications précédentes, dans lequel lors de la simulation du processus d'immersion ou d'émersion respectivement dans le ou hors du bain de liquides les vitesses de pénétration et d'écoulement respectivement dans ou hors des parties de la carrosserie de véhicule (2a, 2b, 2c, 2d) sont négligées.

10. Procédé selon l'une des revendications 1 à 8, dans lequel lors de la simulation du processus d'immersion ou d'émersion respectivement dans le ou hors du bain de liquides les vitesses de pénétration ou d'écoulement respectivement dans ou hors des parties de la carrosserie de véhicule (2a, 2b, 2c, 2d) sont prises en considération.

11. Procédé selon l'une des revendications précédentes, dans lequel lors de la simulation du processus d'immersion ou d'émersion respectivement dans le ou hors du bain de liquides les quantités de liquides s'égouttant dans le bain de liquides et/ou les quantités de liquides gouttant sur le bain de liquides sont négligées.

12. Procédé selon l'une des revendications 1 à 10, dans lequel lors de la simulation du processus d'immersion ou d'émersion respectivement dans le ou hors du bain de liquides les quantités de liquides s'égouttant et/ou gouttant sont prises en considération.

13. Procédé selon l'une des revendications précédentes, dans lequel la simulation du processus d'immersion ou d'émersion ou de mise en mouvement est sensiblement basée sur des données géométriques définissant la carrosserie de véhicule (2a, 2b, 2c, 2d) et sur la position angulaire de celle-ci par rapport à un plan de référence, notamment la surface du liquide.

14. Dispositif (11) de simulation de processus de production et/ou de processus préparatoires de production et/ou de processus de post-traitement de production, lequel est conçu et agencé de sorte à permettre la mise en oeuvre d'un procédé de simulation selon l'une des revendication 1 à 10.
